# EUROPÄISCHE PATENTSCHRIFT

(11) **EP 1 903 650 B1**
(45) Veröffentlichungstag und Bekanntmachung des Hinweises auf die Patenterteilung: **14.05.2014**
(21) Anmeldenummer: 07011423.6
(22) Anmeldetag: 12.06.2007
(51) Int. Cl.: H02G 15/064

(54) **Freiluftendverschluss**
Outdoor cable termination
Extrémité extérieure de câbles

(30) Priorität: 03.08.2006 DE 102006036233
(43) Veröffentlichungstag der Anmeldung: 26.03.2008
(73) Patentinhaber: nkt cables GmbH, 51061 Köln (DE)
(72) Erfinder: Amerpohl, Uwe, 51467 Bergisch-Gladbach (DE)

(56) Entgegenhaltungen:
- EP-A- 1 494 329
- FR-A- 2 083 602
- US-A- 5 130 495

## Beschreibung

Die Erfindung begriff einen Kabelendverschluss, vorzugsweise einen Freiluftendverschluss für Mittel- oder Hochspannung. Der Gegenstand gehört zu Endverschlüssen mit Stützerfunktion, bei denen keine Öle oder andere chemische Füllungen als Isoliermaterial verwendet werden. Solche Endverschlüsse werden auch als trockene Endverschlüsse bezeichnet.

Es sind Endverschlüsse bekannt, bei denen ein mechanisch stabil ausgebildeter Isolierkörper die auf den Endverschluss wirkenden Kräfte (Zuglasten und Biegekräfte vom Freileiterseil, Gewicht des eingeführten Kabels) aufnimmt. Solche Isolierkörper können aus Porzellan oder aus faserverstärkten Kunststofien hergestellt sein. Dadurch erhalten diese Endverschlüsse ein unverhältnismäßig großes Gewicht und sind unhandlich in der Montage und benötigen in der Regel eine Isolierflüssigkeit.

Ein trockener Endverschluss - also ohne Verwendung von Isolierflüssigkeit - ist in der EP 0667665 B1 dargestellt. Die Kraftableitung erfolgt von der Freileiteranbindung über das starre leitende Element, über einen Grundkörper mit Feldsteuer- und Isoliereinrichtung auf den Lageraufbau. Schwachstelle dieser Anordnung ist der Übergang vom leitenden, starren Element auf den Grundkörper.

Es ist ein weiterer Kabelendverschluss mit selbsttragender Struktur (EP 0683555 A1) bekannt. Die mechanische Festigkeit liefert wiederum ein steifes Metallrohr oder ein steifes mit leitender Beschichtung versehenes Rohr, welches über einen Teil der Gesamtlänge des Endverschlusses zwischen Befestigungsplattform und Freileiterklemme eingebracht ist. Das zur Kabeleinführöfnung gerichtete Ende des Isolierkörpers aus relativ starrem Polymer ist als Einführungskonus ausgebildet. In diese Kabeleinführöffnung wird das mit Steuerelektroden und gummielastisch ausgebildete konische Abschlußende des Kabels eingerührt und mittels Spannmitteln kraft- und formschlüssig verpresst. Beim Austausch eines Kabels muss die gesamte Struktur demontiert werden. Insbesondere die Spannmitteln (unten) und die Befestigung des Freileiters (oben) müssen gelöst werden. Dieser Aufwand bei den Montagearbeiten ist Nachteil.

Ein anderer trockener Kabelendverschluss US 5 130 495 umfasst ein den Kabelleiter umgebendes Dielektrikum und einen mit Schirmtellern ausgebildeten Isolator aus Porzellan. Das Dielektrikum zeigt einen inneren Kanal zum Durchschieben des Kabelleiters. Der Zusammenbau aus Isolator und Dielektrikum wird fabrikfertig hergestellt. Im unteren Bereich des Zusammenbaus befindet sich ein metallischer Feldsteuerzylinder zur Absteuerung der Hochspannung am unstetigen Übergang vom Kabelende zur Fußaramatur.

Die Erfindung geht aus von einem in EP 1 494 329 A1 beschriebenem Kabelendverschluss. Die Stabilität dieses Endverschlusses wird gebildet durch einen Isolator aus einem starrem Polymer mit hoher mechanischen Festigkeit, wie ein steifes Gießharz-Material oder faserverstärktes Epoxidharz. Auf der Oberfläche des Isolators ist eine Struktur mit Schirmtellem aus einem Polymer aufgebracht. Es liegt eine innige Verbindung des Isolierkörpers mit einem starren Leiter vor. Die Querkräfte am Kopfendes des Kabelendverschlusses können damit vollständig abgefangen werden. Der Potentialsprung zwischen Kabelende und Fußarmatur wird mittels eines auf das Kabelende aufschiebbaren gummielastischen Feldsteuerprofils abgesteuert. Zwischen Kabel und Isolator wird ein Anpressdruck sufgewandt, so dass es zwischen Kabelende, Feldsteuerprofil und Isolator zu einer hermetischen Anlage kommt. Bei dieser Konstruktion werden aufwändige Mittel zur Herstellung der Verpressung zwischen Kabelende und Isolator eingesetzt.

Es ist Aufgabe der Erfindung, einen Kabelendverschluss, vorzugsweise einen Hochspannungs-Freiluftendverschluss vorzuschlagen, dessen Kunststoffelemente im Spritz- oder Gießprozess in einem Werkzeug in möglichst wenigen Arbeitsgängen gebildet werden, bei dem das Kabelende in Aufschiebetechnik in den Isolator eingebracht werden kann und bei dem dennoch eine ausreichend mechanische Stabilität zur Aufnahme der an der Kopfarmatur auftretenden Kräfte vorhanden ist.

Die Aufgabe wird durch die Merkmale des Hauptanspruchs gelöst. Weiterführende Ausführungsformen finden sich in den Unteransprüchen.

Der Kern der Erfindung ist das tragende Element des Kabelendverschlusses aus zwei metallischen Teilen (ein langgestreckter Metallkörper - hier ein Rohr - und ein Strukturelement) und dem nur aus einem elastomeren Material hergestellten Isolierkörper. Das Strukturelement soll in einer Länge von einem Viertel bis einem Drittel der Länge des Isolierkörpers ausgeführt werden. Metallkörper und Strukturelement geben dem Kabelendverschluss die nötige Stabilität. Der Isolierkörper besteht aus elastomerem Material. Der Aufbau eines solchen Isolierkörpers mit den tragenden Elementen reicht aus, die Kräfte am Kopfendes des Kabelendverschlusses vollständig abzufangen.

Mit der Ausbildung des Isolierkörpers aus einem elastomerem Werkstoff macht sich die Erfindung den Vorteil zunutze, sowohl den Isolierkörper als auch die Schirmteller des Isolierkörpers aus einem einheitlichen Material herstellbar zu gestalten. Weiterhin kann im Isolierkörper die Potentialsteuerung integriert sein für die meisten Anwendungsfälle, bei denen der Isolierkörper passend zu einer Kabeldimension hergestellt ist. Für wenige davon abweichenden Anwendungen wird vorgeschlagen, einen Feldsteueradapter einzusetzen, um damit Kabel mit unterschiedlichen Kabeldurchmessern verwenden zu können.

An dem metallischen Stützrohr ist eine zur Kopfarmatur gerichtete und an der Kopfarmatur befestigte Kopfplatte angeordnet; an dem Strukturelement ist ein zur Fußarmatur gerichteter Fußflansch angeordnet. In das Innere des Isolierkörpers hinein umfasst das Strukturelement einen Feldsteuerzylinder. Im Isolierkörper sind das Stützrohr (in voller Länge) und der Feldsteuerzylinder des Strukturelements hermetisch eingebettet. Vorzugsweise soll der Kabelendverschluss mit innerer Stützfunktion eingesetzt werden für elektrische Hochspannungskabel von 72 bis 500 kV.

Zur Herstellung des tragenden Elements werden das metallische Stützrohr (mit Kopfplatte) und das Strukturelement in ein Werkzeug eingelegt und das Isoliermaterial des Isolierkörpers eingefüllt, welches im Werkzeug abbindet oder aushärtet. Im Werkzeug kann von vornherein auch das Schirmprofil ausgebildet sein.

Das Isoliermaterial des Isolierkörpers besteht aus geeigneten und für die Anwendung erprobten Stoffen, beispielsweise aus mindestens einem synthetischen Elastomer, wie Silikonkautschuk (RTV- oder LSR-Silikonkautschuk) oder aus Ethylen-Propylen-Kautschuk oder Ethylen-Propylen-Dien-Kautschuk (EPR, EPDM). Der Isolierkörper kann mit Ausnahme des Kabeleinführabschnittes stofflich verstärkt sein, beispielsweise mit Glasfasern. Die Shore-Härte des Isolierkörpers sollte nicht zu groß sein, da im Kabeleinführabschnitt der Isolierkörper elastisch aufweitbar sein soll. Die Shore-Härte des Isolierkörpers soll daher größer sein als 35 und kann bis etwa 55 reichen. Der Durchmesser der Bohrung im Bereich des Kabeleinführabschnittes des Isolierkörpers wird einige Prozent geringer hergestellt als der Durchmesser des einzuführenden Kabelendes, um einen guten Aufpressdruck zu erhalten. Der Isolierkörper wird über das Kabelende aufgeschoben. Da keine weiteren Isolierstoffe eingesetzt werden, gehört der Kabelendverschluss zu den trocknen Systemen. '

Die Teile des tragenden Elements bildet eine Einheit für die Einbindung des Kabelendes in den Endverschluss, zur Befestigung auf einer stabilen Unterlage (Traverse) und zur Anbringung des Freileiters an der Kopfarmatur. Stützrohr und Strukturelement (als Teile des tragenden Elements) übernehmen vollständig die mechanische Beanspruchung der auf den Endverschluss wirkenden Kräfte, da die Überdeckungslänge zwischen Stützrohr und Strukturelement besonders lang ist. Im Gegensatz zu bekannten Endverschlüssen, ist der Isolierkörper relativ schwach oder dünn ausgebildet.

Die Kopfarmatur besteht im wesentlichen aus einem elektrisch leitenden Abschlussteller, der der am Stützrohr angeordneten Kopfplatte aufliegt und mit dieser verschraubt ist. Weiterhin umfasst die Kopfarmatur einen Freileiteranschlussstutzen, in dem noch ein Gewinde zur Befestigung einer Tragöse eingebracht sein kann. Der elektrische Kontakt zwischen Kabelleiter und Kopfarmatur wird im Abschlussteller über eine metallische Pressung oder über Abreißschrauben vermittelt. Die Teile des tragenden Elements der vorliegenden Anordnung sind so aufgebaut und dimensioniert, dass sie alle auftretenden Kräfte aufnehmen und sie auf die Fußarmatur übertragen, wobei durchaus geringe elastische Verformungen zulässig sind. Als eine typische Größe möglicher Querkräfte wird mit 5 kN gerechnet, so dass die mechanische Auslegung an dieser Kenngröße zu bemessen ist.

Der Kabelendverschluss ist einseitig auf einer stabilen Unterlage, vorzugsweise zur Befestigung auf einer Traverse aufgeständert. Das Kabel erhält seinen Halt am Kabelendverschluss durch die Befestigung des Kabelleiters mit der Kopfarmatur. Am Kabelendverschluss und an der Fußarmatur sind sonst keine weiteren Mittel zur Befestigung des Kabels ausgebildet.

An einer Fußarmatur befinden sich Mittel zum elektrischen Verbinden der Kabelabschirmung mit Erdpotential, vorzugsweise in Form einer Metallhaube. Letztere dient auch dem Schutz und/oder der Fixierung des Kabelmantels.

Vorteilhafte Ausführungsformen des Kabelendverschlusses haben folgende Merkmale, die einzeln oder in Kombination miteinander beansprucht sein können.

Der Kabelleiter ist bis zur Kopfarmatur geführt und dort leitend befestigt. Als alternative Ausbildung kann jedoch auch der Kabelleiter in einen Kabelsteckkontakt eingeführt sein, welcher mit der Kopfarmatur leitend verbunden ist. Der Kabelsteckkontakt kann vorzugsweise am unteren Ende des Stützrohrs liegen, oder auch etwa in der Mitte des Endverschlusses liegen. Bei einer solchen Ausführungsform wird das Stützrohr zum aktiven Stromleiter. Bei der zuletzt beschriebenen Form kann die Kopfarmatur einfach gestaltet und geschlossen ausgebildet sein, da dort Mittel zur Befestigung des Kabelleiters wegfallen können.

Der Feldsteuerzylinder ist einstückig mit dem Fußflansch ausgebildet.

Am Fußflansch ist in Richtung Kabeleinführöffnung ein zylindrischer Rohrabschnitt ausgebildet. Damit wird eine Verstärkung des Strukturelements erreicht, wodurch ein noch größerer Widerstand gegen Kraftüberleitung vom Freileiter zur Fußarmatur aufgebracht und der Endverschluss versteift wird.

Zu Feldsteuerung an unstetigen Potentialübergängen am abgesetzten Kabelende werden im Kabelendverschluss unterschiedliche Lösungen vorgeschlagen. Eine erste Form kann darin bestehen, dass im Isolierkörper Feldsteuerkörper aus elastomerem Material eingebettet sind. Die Einbettung erfolgt bei der Herstellung des tragenden Elements, wo gemeinsam mit den metallischen Teilen auch die Feldsteuerkörper in das Werkzeug eingebracht und dort umhüllt werden mit dem Isoliermaterial des Isolierkörpers.

Eine alternative Ausbildung kann darin bestehen, dass getrennt vom Isolierkörper - und somit auch getrennt vom zuvor beschriebenen Herstellschritt - ein eigener Feldsteueradapter aus elastomerem Material im Kabelendverschluss angeordnet ist.

Der Isolierkörper kann im Inneren des Strukturelements und außerhalb des Strukturelements aus unterschiedlichen Materialien gebildet sein. Diese Eigenschaft verweist wieder auf den Herstellprozess des tragenden Elements. Die Teile des tragenden Elements, Stützrohr und Strukturelement, werden in das Werkzeug eingelegt und im Bereich (im Inneren) des Strukturelements mit einem ersten Isoliermaterial ausgefüllt und abbinden oder aushärten gelassen. Daraufhin wird der verbleibende Raum im Werkzeug mit einem vom ersten Isoliermaterial verschiedenen Isolierstoff gefüllt, der danach seine Endfestigkeit erreicht.

Es sind Mittel zum elektrischen Verbinden der Kabelabschirmung mit Erdpotential vorhanden, wobei beispielsweise eine metallische Haube verwendet werden kann.

Die Oberfläche des Isolierkörpers besteht aus einem im Spritz- oder Gießprozess aufgetragenen Schirmprofil. Die aufgetragene Masse ist relativ dünn, sie trägt kaum zur mechanischen Verstärkung der Konstruktion bei. Die Länge und insbesondere der Durchmesser des Isolierkörpers sind so zu wählen, dass die Ansprüche auf ausreichende Isolation und Vermeidung von atmosphärischen Überschlägen bei voller Betriebsspannung erreicht werden. Diese Anforderung lässt sich vorzugsweise dadurch verbessern, wenn die Oberfläche des Isolierkörpers mit einem resistiven oder refraktiven Steuerbelag bedeckt wird. Solche Beläge dienen der Vergleichmäßigung des elektrischen Feldverlaufs. Für diesen Zweck sind Schichten aus dünnem leitfähigem Material oder aus Schichten aus halbleitenden Kunststoffen bekannt. Eine Sonderform einer leitenden Beschichtung findet sich in der FR 2 547 451 A1, wo die Leitfähigkeit unlinear von der Spannung abhängt.

Die Endverschluss ist für Freiluft und für Innenraum geeignet.

Die üblichen Verfahrensschritte bei der Vorbereitung des Kabelendes zur Montage sollen kurz aufgezählt werden: Entfernung des Außenmantels, Umbiegen der Schirmdrähte und Anschluss eines Mittels zur Erdung des Kabelschirms, Schälen der äußeren Leitschicht, Freilegen des Kabelleiters und eventuell Aufbringen eines Steueradapters (bei Einsatz der zweiten Ausführungsform). Das so vorbereitete Kabelende wird von unten in den Endverschluss eingeführt und der Kabelleiter an der Kopfarmatur befestigt. Nach solchen Vorbereitungen kann der Endverschluss auf eine Traverse angehoben und dort befestigt werden. Es kann jedoch auch der Endverschluss schon auf einem Mast oder einer anderen Befestigungsstelle angeordnet sein, und anschließend das Kabelende eingeführt und befestigt werden. Die Montagefolge hängt von den örtlichen Gegebenheiten ab und kann flexibel gehandhabt werden.

Der Kabelendverschluss ist - auch für verschiedene Spannungsebenen - relativ einheitlich aufgebaut. Es kann vorgesehen sein, dass für verschiedene Spannungsbereiche je ein Typ eines Endverschlusses hergestellt wird, wobei etwa 5 Typen für Spannungen zwischen 70 und 500 kV ausgebildet werden. Wesentliche Typenunterschiede werden mit im Durchmesser (evtl. auch in Länge) unterschiedlich ausgebildeten Feldsteueradaptern und Isolierkörpern abgedeckt. So könnten etwa die Abmessungen der Feldsteueradapter im Durchmesser 30 bis 40, 40 bis 50, 50 bis 60, 60 bis 70 und 70 bis 80 mm gestuft sein. Zu verschiedenen Spannungsbereichen gehörende Kabel werden von jeweils passenden Feldsteueradaptern und Isolierkörpern 'abgefangen'.

Zum Aufbau eines Kabelendverschlusses - beispielsweise für eine Nennspannung von 145 kV und mit einem Leiterquerschnitt von 1200 mm² - sollen noch einige typische Abmessungen (in mm) angegeben werden:
zum Stützrohr: Länge 1500, Durchmesser 110, Wanddicke 2,5;
zum Isolierkörper: Länge einschließlich unteres Feldsteuerteil 1750, größter Durchmesser (einschl. Schirmlamellen) 350, Schirmausladung 50, Schirmlamellendicke 7; Durchmesser an Kopfarmatur (einschl. Schirmlamellen) 200;
zum Strukturelement: Innendurchmesser 180, Zylinderwanddicke 12, Länge oberhalb Grundplatte 450; Raum zwischen Zylinder und Stützrohr (Schichtdicke der Isolierung) ca. 25 mm.

Ausführungsformen des Freiluftendverschlusses sind in den Figuren dargestellt. Sie zeigen jeweils im Schnitt im Einzelnen:
- Fig. 1: einen ersten Kabelendverschluss mit integrierten Feldsteuerelektroden,
- Fig. 2: einen zweiten Kabelendverschlüsse mit integrierten Feldsteuerelektroden,
- Fig. 3: zwei Formen des Strukturelements,
- Fig. 4: einen Kabelendverschluss mit einem Feldsteueradapter,
- Fig. 5: einen vierten Kabelendverschluss und
- Fig. 6: eine Einzelheit der Leiterverbindung mit einem Kabelsteckkontakt.

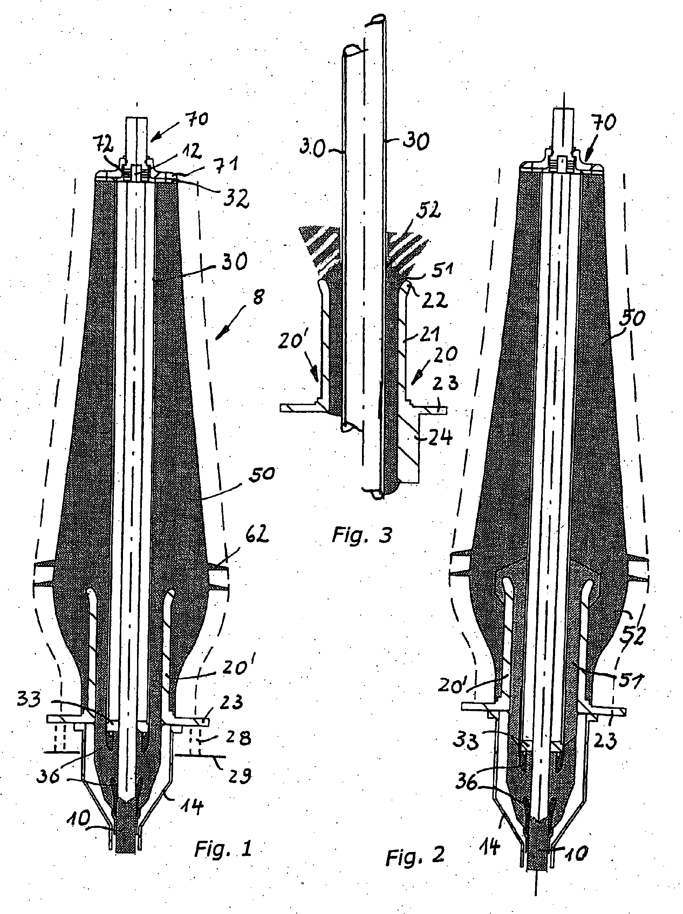

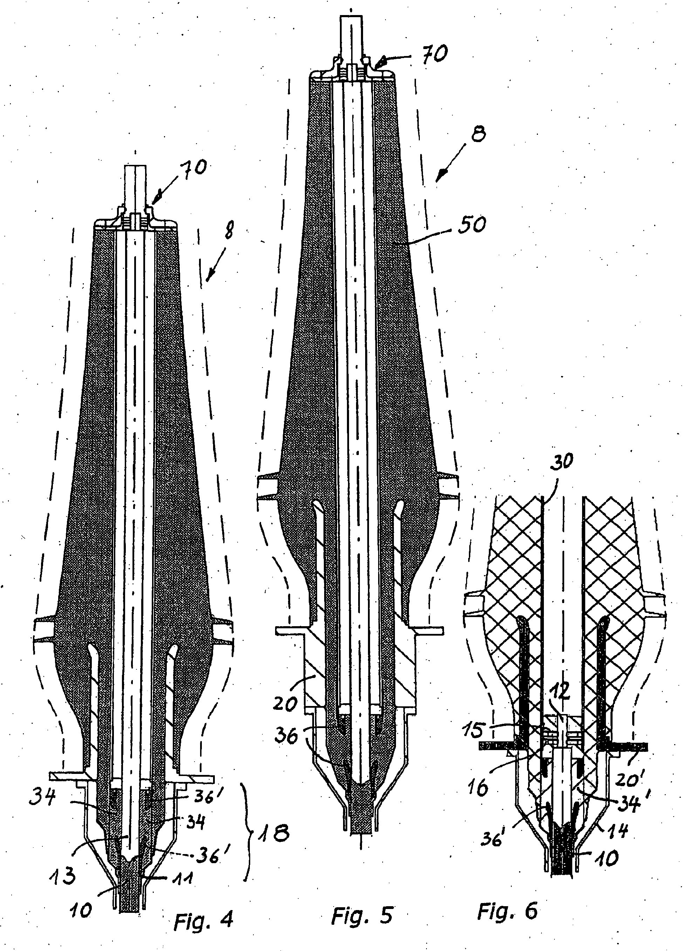

Die Fig. 1 zeigt die bevorzugte einteilige Ausführung eines Kabelendverschluss 8 mit im Isolierkörper 50 integral eingelegten Potentialsteuerelektroden 36. Verschiedene für unterschiedliche Spannungsebenen hergestellte Ausbildungen unterscheiden sich in Innen- und Außendurchmessern des Isolierkörpers 50 und der eingesetzten Feldsteuertechnik. Die einteilige Ausführung des Kabelendverschlusses ist für die meisten Anwendungsfälle einsetzbar, wenn der Isolierkörper passend zu einer Kabeldimension vorgefertigt wird. Für wenige davon abweichenden Anwendungen werden Ausführungen in den Figuren 4 und 6 dargestellt, wo ein Feldsteueradapter 34 oder 34' eingesetzt ist, um damit Kabel mit unterschiedlichen Kabeldurchmessern verwenden zu können.

Die eingelegten Steuerelektroden 36 (36') bestehen aus Isoliermaterial. Die Oberfläche des Isolierkörpers 50 besteht aus einem angeformten Schirmprofil 62.

Die zentralen und tragenden Elemente des Kabelendverschlusses bestehen aus dem metallischen Stützrohr 30 und dem Strukturelement (20, 20'). An dem vorzugsweise aus Aluminium hergestellten Rohr 30 ist (oben) eine zur Kopfarmatur 70 gerichtete Kopfplatte 32 befestigt (vorzugsweise angeschweißt). Am vorzugsweise aus Aluminium hergestellten Strukturelement 20, 20' (Fig. 3) ist der zur Fußarmatur 18 gerichteter Fußflansch 23 angeordnet. In das Innere des Isolierkörpers hinein ragt ein Zylinder 21, welcher sich am oberen Rand in einen Feldsteuertrichter 22 aufweitet. Im Isolierkörper 50 sind das Stützrohr (in voller Länge) und der Feldsteuerzylinder (21,22) hermetisch eingebettet. Am Fuß des Stützrohrs kann ein Ring 33 oder ein anderes geeignetes Mittel (Fig. 2) vorhanden sein, der zur Zentrierung des eingeführten Kabelendes eingesetzt wird. Das metallische Stützrohr 30 liegt auf Hochspannungspotential.

Der Kabelendverschlusses wird an der Fußarmatur mit einer Grundplatte oder einem Flansch auf einem Traggestell (beispielsweise eine Traverse über Isolierstützer 28) verschraubt.

Das Hochspannungskabel 10 ist in den unteren Bereich des Endverschlusses eingeführt. Das vom Kabelschirm 11 befreite Kabelende wird innerhalb des Stützrohrs 30 geführt. Das Kabelende kann auch schon auf der Höhe der Fußarmatur 18 bis auf den Kabelleiter 12 abgesetzt sein, so dass der Kabelleiter in voller Länge im Stützrohr liegt. Die im Stützrohr geführte Kabelader (als blanker Leiter, oder noch mit Kabelisolierung umgeben) wird über die Kopfarmatur 70 abgeschlossen. Der Anschluss zu einem Freileiter wird über die mit Gewindebohrungen versehene Abschlussplatte 71 der Kopfarmatur 70 erreicht, die der Kopfplatte 32 aufliegt (und mit Schrauben verbunden ist). Der Kabelleiter wird in der Leiterverbindung 72 in der Abschlussplatte mit Abreißschrauben oder über Metallpressung oder -prägung in der Kopfarmatur befestigt. An der Kopfarmatur ist noch ein Freileiteranschlussstutzen erkennbar, an dem der Freileiter zu befestigen ist.

Die Schirmdrähte des Kabels 11 stehen in elektrischem Kontakt (über einen Blechschirm oder eine Haube 14) mit der Grundplatte 23 oder dem Flansch der Fußarmatur, die über Isolatoren 28 auf einer Traverse 29 eines Mastes aufgeständert ist.

Wie erwähnt, werden zur Steuerung der unstetigen Potentialübergänge Feldsteuerelektroden 36 (36') oder -adapter 34 (34') eingesetzt. Für verschiedene, unterschiedlichen Spannungen zugeordnete Kabel, die sich im Durchmesser unterscheiden, können jeweils passende Ausführungen bereitgehalten werden.

Die Figur 2 zeigt einen Kabelendverschluss, der sich von der Ausführung in Fig. 1 dadurch unterscheidet, dass der Isolierkörper 50 aus zwei unterschiedlichen Materialien (51 und 52) besteht. Die Materialien liegen ohne eigentliche Trennfläche aufeinander, bzw. gehen relativ homogen ineinander über. Der Zwischenraum 51 im Strukturelement enthält eine Füllung aus besonders mechanisch belastbarem Kunststoff, beispielsweise aus Gießharz. Die Ausfüllung mit Material (51), welches stärker als Silikonkautschuk (52) mechanisch belastbar ist, erhöht die mechanische Stabilität und dient der besseren Übertragung der Lasten.

Die Fig. 3 zeigt links und rechts zwei Formen des metallischen Strukturelements 20, 20' im Schnitt. Die wesentlichen Teile des Strukturelements sind die Grundplatte 23 und ein in den Isolierkörper 50 ragender Zylinder 21. Der Zylinder hat etwa die Länge von 20 bis 35% der Länge des Isolierkörpers. Der Zwischenraum zwischen dem Zylinder 21 und dem Stützrohr 30 im Strukturelement ist mit Isoliermaterial 51 gefüllt, vorzugsweise aus besonders mechanisch belastbarem Kunststoff. Durch die innige Stoffverbindung zwischen Stützrohr 30, dem Strukturelement 20 und dem Isolierkörper 50 kommt eine tragende Struktur zustande, die zur vollständigen Aufnahme der mechanischen Beanspruchung auf den Endverschluss geeignet ist. Der Unterschied zwischen dem in der linken Bildhälfte der Fig. 2 dargestellten Strukturelement 20' zum in der rechten Bildhälfte gezeigten Strukturelement 20 besteht in der zylinderförmigen Verlängerung 24 unterhalb der Grundplatte 23. Der Zusammenbau eines Strukturelements 20 mit einem Kabelendverschluss ist in Fig. 5 dargestellt.

Im Bereich der Fußarmatur 18 befinden sich im Isolierkörper 50 Einrichtungen zur Potentialsteuerung, wobei der Isolierkörper bei allen Ausführungsformen zum Kabel hin über das Strukturelement 20 hinausreicht und etwa auf der Höhe der auf der - typischerweise aus vernetztem Polyethylen (VPE) - bestehenden Kabelisolierung freigelegten Leitschicht endet. Wesentlich ist, dass die Elastizität des Isolierkörpers im Bereich der Kabeleinführung hinreichend groß ist, so dass dort der Isolierkörper aufweitbar und das Kabelende einschiebbar ist. Kabeldurchmesser können zwischen 40 bis 90 mm (bei 110 kV) liegen. Wodurch für den Kabeleinführbereich des Isolierkörpers eine elastische Aufweitung um ca. 5 bis 10 mm notwendig ist.

Die Dimensionierung des Isolierkörpers 50 ist so vorgenommen, dass die Außenfeldstärke in allen Betriebszuständen unterhalb kritischer Werte liegt. Bedingt durch den Einbau von Feldsteuerelektroden entsteht im unteren Bereich ein relativ großer Durchmesser. Der Durchmesser oberhalb des Feldsteuerbereiches verjüngt sich.

Die Figur 4 zeigt eine weitere Form des Kabelendverschlusses, die sich in der Form der Feldsteuerung im Bereich der Kabeleinführung unterscheidet. In der Fig. 4 (und in Fig. 6) ist ein Feldsteueradapter 34, 34' für die Potentialsteuerung am unteren Ende des Kabelendverschlusses getrennt - aber im engen Kontakt - vom Isolierkörper 50 eingesetzt. Der Potentialsteueradapter 34, 34' besteht - wie üblich - aus Isoliermaterial mit eingelegten Steuerelektroden 36'.

In der Größe (in Länge und Durchmesser) unterschiedliche Feldsteueradapter 34, 34' werden eingesetzt, um unterschiedliche Kabeltypen aufnehmen zu können. Der Feldsteueradapter wird über die Leitschicht der Kabelisolierung des vom Schirm befreiten Kabels unter Aufweitung aufgeschoben. Der Feldsteueradapter liegt mit seinen Steuerelektroden auf dem Übergangsbereich von Leiterisolierung und Ende der Leitschicht des Kabels auf. Die Ausbildung der Feldsteuerung des Beispiels nach Fig. 4 ist bekannt bei der Ausbildung von mehrteiligen Kabelmuffen, wobei im vorliegenden Fall quasi der untere Teil der Feldsteuerung des Kabelendverschlusses einer Hälfte einer solchen mehrteiligen Kabelmuffe entspricht. Bei diesen Kabelmuffen wird beiderseits der Kabeleinführung ein Feldsteuerteil aufgeschoben und im Spleißbereich eine Überdeckung mit einem stabilen Muffenkörper ausgebildet.

Anstelle eines Feldsteueradapters kann in dem Bereich auch eine spannungsabhängige Oberflächenbeschichtungen als Feldsteuerschicht mit resistivem oder refraktivem Steuerbelag vorhanden sein.

Der Kabelendverschluss aus Fig. 5 unterscheidet sich von einem Kabelendverschluss nach Fig. 1 durch eine unterschiedliche Gestaltung der Strukturelemente 20 und 20'. Unterhalb der Grundplatte 23 ist das Strukturelement 20 mit einem Zylinder 24 zum Kabel hin verlängert. Damit wird am Strukturelement der Bereich der Kraftübertragung von der Kopfarmatur zur Fußarmatur verstärkt. Der Kabelendverschluss wird steifer, er kann größere Kräfte aufnehmen, wodurch er geeignet ist, dort eingesetzt zu werden, wo besonders starke Kräfte vom Freileiter her abgefangen werden sollen.

Es sei noch vermerkt, dass die Ausführungen nach Fig. 2 und Fig. 5 auch jeweils mit einem Feldsteueradapter (34,34') - also nicht mit integrierten Feldsteuerelektroden - ausführbar sind, wie er im Beispiel der Fig. 4 und Fig. 6 dargestellt und beschrieben ist.

Die Fig. 6 zeigt im Bereich des unteren Endes des Stützrohrs 30 eine Einzelheit mit einem Kabelsteckkontakt 15. Zur Potentialsteuerung ist ein Feldsteueradapter 34' eingefügt. Die Kopfarmatur ist jetzt einteilig und geschlossen ausgeführt, da keine Leiteranbindung in diesem Bereich benötigt wird. Bei einer solchen Ausführung kann die Kopfarmatur mit dem jetzt stromführenden Stützrohr 30 als Einheit verschweißt sein. Das Kabel 10 - insbesondere der freigelegte Kabelleiter 12 - endet schon im Eintritt in das Stützrohr in einem auf den Kabelleiter aufgebrachten Stutzen, dessen Außendurchmesser passend zum Innendurchmesser des Stützrohrs ausgebildet ist. Über Kontaktlamellen 16 am Steckkontakt 15 erfolgt die Stromübertragung auf das Stützrohr. Der Stutzen ist mit Schraub- oder Presstechnik mit dem Kabelleiter verbunden.

### Bezugszeichen

- 8: Kabelendverschluss
- 10: Hochspannungskabel
- 11: Kabelabschirmung
- 12: Kabelleiter
- 13: vom Kabelschirm befreites Kabelende
- 14: Haube mit Schirmanbindung
- 15: Kabelsteckkontakt
- 16: Kontaktlamellen
- 18: Fußarmatur
- 20' 20: Strukturelement
- 21: Feldsteuerzylinder
- 22: Potentialsteuertrichter
- 23: Fußflansch
- 24: Rohrabschnitt
- 28: Stützisolator
- 29: Unterlage, Traverse
- 30: Stützrohr
- 32: Kopfplatte
- 33: Zentrierring
- 34: erster Feldsteueradapter (Fig. 4)
- 34': zweiter Feldsteueradapter (Fig. 6)
- 36, 36': Steuerelemente oder Elektroden
- 50: Isolierkörper
- 51: Isoliermaterial im Bereich des Strukturelements
- 52: Isoliermaterial des Isolierkörpers
- 62: Schirmrippen
- 70: Kopfarmatur
- 71: Abschlussteller
- 72: Leiterverbindung

## Patentansprüche

1. Kabelendverschluss (8), insbesondere Freiluftendverschluss für den Übergang von einem elektrischen Mittel- oder Hochspannungskabel (10) zu einem Freileiter, wobei der Kabelendverschluss umfasst:
• eine Fußarmatur (18) zur Aufständerung auf einer Unterlage (29),
• eine Kopfarmatur (70) zu Befestigung des Freileiters,
• eine leitende Verbindung (30, 15, 72) zwischen Kabelleiter (12) und Kopfarmatur (70), wobei an der leitenden Verbindung (30, 15, 72) eine zur Kopfarmatur (70) gerichtete und an der Kopfarmatur (70) befestigte Kopfplatte (32) angeordnet ist,
• ein metallisches, zylindrisches in das Innere des Isolierkörpers (50) hineinragendes, und sich dorthin als Potentialtrichter (22) öffnendes Strukturelement (20, 20'), wobei am Strukturelement ein zur Fußarmatur (18) gerichteter Fußflansch (23) angeordnet ist,
• einen Isolierkörper (50) aus polymerem Material, in den die leitende Verbindung (30, 15, 72) in voller Länge und das Strukturelement (20, 20') mit Ausnahme des Fußflansches (23) eingebettet sind,
**dadurch gekennzeichnet,**
• **dass** der Isolierkörper (50) aus elastomerem Material besteht, und
• **dass** das zur Fußarmatur (18) gerichtete Ende des Isolierkörpers (50) einen Kabeleinführabschnitt zu Aufnahme des Ende des Kabels (10) aufweist, wobei die Elastizität des Isolierkörpers (50) im Kabeleinführabschnitt so bemessen ist, dass der Kabeleinführabschnitt zur Aufnahme des Kabels (10) aufweitbar ist, und
• **dass** das Strukturelement (20, 20') eine Länge von einem Viertel bis einem Drittel der Länge des Isolierkörpers (50) hat.

2. Kabelendverschluss nach Anspruch 1, **dadurch gekennzeichnet, dass** der Kabelleiter (12) bis zur Kopfarmatur (70) geführt und dort leitend befestigt ist.

3. Kabelendverschluss nach Anspruch 1, **dadurch gekennzeichnet, dass** der Kabelleiter (12) in einen Kabelsteckkontakt (15) eingeführt und dieser mit der Kopfarmatur leitend verbunden ist.

4. Kabelendverschluss nach einem der vorhergehenden Ansprüche, **dadurch gekennzeichnet, dass** ein Feldsteuerzylinder (21) einstückig mit dem Fußflansch (23) ausgebildet ist.

5. Kabelendverschluss nach einem der vorhergehenden Ansprüche, **dadurch gekennzeichnet, dass** am Fußflansch (23) in Richtung zur Kabeleinführöffnung ein zylindrischer Rohrabschnitt (24) ausgebildet ist.

6. Kabelendverschluss nach einem der vorhergehenden Ansprüche, **dadurch gekennzeichnet, dass** im Isolierkörper (50) Feldsteuerelektroden (36) aus elastomerem Material eingebettet sind.

7. Kabelendverschluss nach einem der Ansprüche 1 bis 5, **dadurch gekennzeichnet, dass** ein Feldsteueradapter (34, 34') aus elastomerem Material (34, 34', 36, 36') im Kabelendverschluss (8) angeordnet ist, wobei der Isolierkörper (50) ohne Feldsteuerkörper ausgebildet ist.

8. Kabelendverschluss nach dem vorhergehenden Anspruch, **dadurch gekennzeichnet, dass** der Isolierkörper (50) im Inneren des Strukturelements (20, 20') und außerhalb des Strukturelements (20, 20') aus unterschiedlichen Materialien (51, 52) besteht.

9. Kabelendverschluss nach Anspruch 8, **dadurch gekennzeichnet, dass** der Isolierkörper (50) im Inneren des Strukturelements (20, 20') aus Gießharz (51) besteht.

10. Kabelendverschluss nach einem der vorhergehenden Ansprüche, **dadurch gekennzeichnet, dass** Mittel (14) zum elektrischen Verbinden der Kabelabschirmung (11) mit Erdpotential vorhanden sind.

11. Kabelendverschluss nach einem der vorhergehenden Ansprüche, **dadurch gekennzeichnet, dass** die Oberfläche des Isolierkörpers (50) aus einem im Spritz- oder Gießprozess aufgetragenen Schirmprofil (62) besteht.

## Claims

1. Outdoor cable termination (8), in particular an outdoor cable termination for the transition from an electric medium- or high-voltage cable (10) to an overhead conductor, the outdoor cable termination comprising:
• a base fitting (18) for mounting on a base (29),
• a top fitting (70) for securing the overhead conductor,
• a conductive connection (30, 15, 72) between the cable conductor (12) and the top fitting (70), on which is arranged a top plate (32) positioned towards the top fitting (70), and secured to the top fitting (70),
• a metallic, cylindrical structural component (20, 20') projecting into the interior of the insulating body (50), the structural component (20, 20') widens out to form a potential control funnel (22), a base flange (23) arranged on the structural component (20, 20'), the base flange (23) positioned towards the base fitting (18),
• an insulating body (50) made of polymeric material, the conductive connection (30, 15, 72) and the structural component (20, 20'), with the exception of the base flange (23), are embedded in the insulating body (50),
**characterised in that**
• the insulating body (50) is made of elastomeric material, and
• the end of the insulating body (50) positioned towards the base fitting (18) possesses a cable supporting portion for insertion the end of the cable (10), whereby the resilience of the insulating body (50) in the region of the cable inlet opening is sufficiently great in order the insulating body is expandable for insertion the cable end there, and
• **in that** the structural component (20, 20') has a length of one quarter to one third of the length of the insulating body (50).

2. Outdoor cable termination according to claim 1, **characterised in that** the cable conductor (12) is guided to the top fitting (70) and is conductively secured there.

3. Outdoor cable termination according to either claim 1, **characterised in that** the cable conductor (12) is inserted into a cable plug contact (15) and this is conductively connected to the top fitting.

4. Outdoor cable termination according to any one of the preceding claims **characterised in that** a field control cylinder (21) is configured integrally with the base flange (23).

5. Outdoor cable termination according to any one of the preceding claims **characterised in that** a cylindrical tube portion (24) is formed at the base flange (23) in the direction of the cable inlet opening.

6. Outdoor cable termination according to any one of the preceding claims, **characterised in that** field control electrodes (36) made of elastomeric material are embedded in the insulating body (50).

7. Outdoor cable termination according to any one of claims 1 to 5, **characterised in that** a field control adapter (34, 34') made of elastomeric material (34, 34', 36, 36') is arranged in the outdoor cable termination (8), the insulating body (50) being configured without a field control element.

8. Outdoor cable termination according to the preceding claim **characterised in that** the insulating body (50) is made of different materials (51, 52) in the interior of the structural component (20, 20') and outside of the structural component (20, 20').

9. Outdoor cable termination according to claim 8, **characterised in that** the insulating body (50) is made of casting resin (51) in the interior of the structural component (20, 20').

10. Outdoor termination according to any one of the preceding claims **characterised in that** means (14) for electrically connecting the cable shield (11) with the earth potential are provided.

11. Outdoor cable termination according to any one of the preceding claims **characterised in that** the surface of the insulating body (50) consists of a shield profile (62) applied in an injection-moulding or casting process.

## Revendications

1. Extrémité extérieure de câble (8), en particulier extrémité extérieure pour la transition entre un câble moyenne tension ou haute tension (10) et un câble aérien, ladite extrémité de câble comportant :
- une armature inférieure (18) pour la pose sur un support (29),
- une armature supérieure (70) pour la fixation du câble aérien,
- une connexion conductrice (30, 15, 72) entre le conducteur (12) du câble et l'armature supérieure (70), une plaque supérieure (32), orientée vers l'armature supérieure (70) et fixée à l'armature supérieure (70), étant agencée au niveau de la connexion conductrice (30, 15, 72),
- un élément structurel (20, 20') métallique cylindrique, qui pénètre à l'intérieur du corps isolant (50) et s'y ouvre sous la forme d'un cône de potentiel (22), une collerette inférieure (23) orientée vers l'armature inférieure (18), étant disposée sur l'élément structurel,
- un corps isolant (50) en matériau polymère, dans lequel sont incorporés la connexion conductrice (30, 15) dans toute sa longueur et l'élément structurel (20, 20') à l'exception de la collerette inférieure (23),
**caractérisé**
- **en ce que** le corps isolant (50) est réalisé dans un matériau élastomère, et
- **en ce que** l'extrémité du corps isolant (50), orientée vers l'armature inférieure (18), comporte une partie pour l'introduction du câble destinée à recevoir l'extrémité du câble (10), l'élasticité du corps isolant (50) dans la partie pour l'introduction du câble étant choisie de telle sorte que ladite partie pour l'introduction du câble peut s'évaser pour recevoir le câble (10), et
- **en ce que** l'élément structurel (20, 20') a une longueur d'un quart à un tiers de la longueur du corps isolant (50).

2. Extrémité extérieure de câble selon l'une quelconque des revendications précédentes, **caractérisée en ce que** le conducteur (12) du câble est guidé jusqu'à l'armature supérieure (70) et y est fixé de manière conductrice.

3. Extrémité extérieure de câble selon la revendication 1, **caractérisée en ce que** le conducteur (12) du câble est introduit dans un contact mâle (15) du câble et, dans celui-ci, est relié de manière conductrice à l'armature supérieure.

4. Extrémité extérieure de câble selon l'une quelconque des revendications précédentes, **caractérisée en ce qu'**un cylindre de commande de champ (21) est réalisé d'un seul tenant avec la collerette inférieure (23).

5. Extrémité extérieure de câble selon l'une quelconque des revendications précédentes, **caractérisée en ce qu'**une partie tubulaire (24) cylindrique est réalisée sur la collerette inférieure (23) en direction de l'ouverture d'introduction du câble.

6. Extrémité extérieure de câble selon l'une quelconque des revendications précédentes, **caractérisée en ce que** des électrodes de commande de champ (36) en matériau élastomère sont incorporées dans le corps isolant (50).

7. Extrémité extérieure de câble selon l'une quelconque des revendications 1 à 5, **caractérisée en ce qu'**un adaptateur de commande de champ (34, 34') en matériau élastomère (34, 34', 36, 36') est disposé dans l'extrémité extérieure de câble (8), le corps isolant (50) étant réalisé sans corps de commande de champ.

8. Extrémité extérieure de câble selon l'une quelconque des revendications précédentes, **caractérisée en ce que** le corps isolant (50) est réalisé dans des matériaux (51, 52) différents à l'intérieur de l'élément structurel (20, 20') et à l'extérieur de l'élément structurel (20, 20').

9. Extrémité extérieure de câble selon la revendication 8, **caractérisée en ce que** le corps isolant (50) est réalisé en résine moulée (51) à l'intérieur de l'élément structurel (20, 20').

10. Extrémité extérieure de câble selon l'une quelconque des revendications précédentes, **caractérisée en ce qu'**il est prévu des moyens (14) destinés à relier électriquement le blindage (11) du câble au potentiel de la terre.

11. Extrémité extérieure de câble selon l'une quelconque des revendications précédentes, **caractérisée en ce que** la surface du corps isolant (50) est constituée par un profil de blindage (62) appliqué dans un processus de moulage par injection ou un processus de coulée.
